# EUROPEAN PATENT SPECIFICATION

(11) **EP 3 617 560 B1**
(45) Date of publication and mention of the grant of the patent: **30.06.2021**
(21) Application number: 19194217.6
(22) Date of filing: 29.08.2019
(51) Int. Cl.: F16H 59/02, F16H 59/10

(54) **GEARSHIFT LEVER DEVICE**
SCHALTHEBELVORRICHTUNG
DISPOSITIF DE LEVIER DE CHANGEMENT DE VITESSES

(30) Priority: 31.08.2018 JP 2018162604
(43) Date of publication of application: 04.03.2020
(73) Proprietor: Fuji Kiko Co., Ltd., Shizuoka 431-0431 (JP)
(72) Inventor: MATSUMOTO, Akio, Kosai-shi, Shizuoka 431-0431 (JP); TAKAHIRA, Tomohiro, Kosai-shi, Shizuoka 431-0431 (JP); KUBOTA, Katsushi, Kosai-shi, Shizuoka 431-0431 (JP); SATO, Yukihiro, Kosai-shi, Shizuoka 431-0431 (JP); HAKAMATA, Takumi, Kosai-shi, Shizuoka 431-0431 (JP)
(74) Representative: Grünecker Patent- und Rechtsanwälte PartG mbB

(56) References cited:
- US-A- 5 622 079
- US-A1- 2008 098 845
- US-A1- 2017 017 256
- US-B2- 9 651 139

## Description

### Technical Field

The present invention relates to a gearshift lever device.

### Background Art

There has been known a gearshift lever device including a gearshift lever that is operated to shift relative to a main body case by a driver for gear change (see Japanese Patent Application Publication No. 2010-280349).

Some gearshift lever devices of this type include a gearshift lever including an operation portion formed on an upper end portion and a shaft support portion formed on a lower end portion and a select lever including a holding portion that holds the shaft support portion of the gearshift lever. In such gearshift lever device, a coupling piece is provided on a middle portion in an axial direction of the gearshift lever, and a coupling hole to be engaged with the coupling piece is formed in a side wall portion of the select lever. A gearshift lever comprising a gearshift lever and a select lever, which includes a holding portion , shift direction side wall portions and engage portions is disclosed in US 5622079 A.

### Summary

In the gearshift lever device with the above-described configuration, the side wall portion of the select lever is arranged on one side in a select direction of the gearshift lever, and the side wall portion may be made thick so as to increase an area of engagement between the coupling piece and the coupling hole and increase the strength of the select lever. As the thickness of the side wall portion becomes larger, the thickness of the select lever in the select direction becomes larger accordingly, which may also result in increase of the size of the entire gearshift lever device.

The object of the present invention is to achieve an improvement of the strength of the select lever (select lever main body).

A gearshift lever device according to the present invention is defined in independent claim 1. Preferred embodiments are set out in the dependent claims.

According to a gearshift lever device of an aspect of the present invention, it is possible to suppress increase of the thickness in a select direction of a select lever and achieve downsizing of an entire gearshift lever device.

### Brief Description of Drawings

Fig. 1 is an exploded perspective view of a gearshift lever device according to an embodiment of the present invention.
Fig. 2 is a perspective view of a gearshift lever and a select lever in a state where the gearshift lever is shifted to a shift operation position.
Fig. 3 is a perspective view of the gearshift lever and the select lever in a state where the gearshift lever is shifted to a select operation position.
Fig. 4 is a perspective view of the gearshift lever and the select lever viewed from an opposite side of Fig. 2.
Fig. 5 is a plan view of a select lever plate.
Fig. 6 is a side view of the select lever plate.

### Description of Embodiments

An embodiment of the present invention is described below in detail with reference to the drawings.

In the drawings, an arrow X indicates a select direction of a gearshift lever (vehicle right-left direction), an arrow Y indicates a shift direction of the gearshift lever (vehicle front-rear direction), and an arrow Z indicates an axial direction of the gearshift lever (vehicle top-down direction).

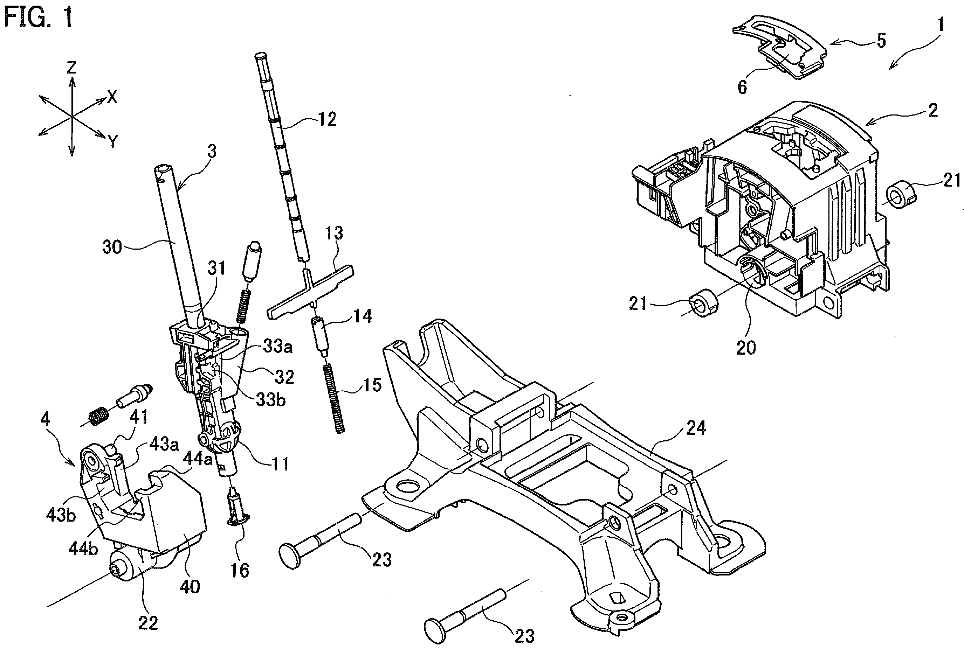

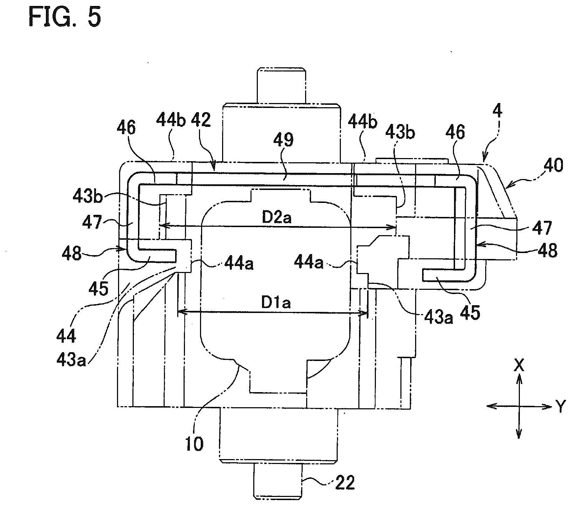

As illustrated in Fig. 1, the gearshift lever device 1 includes a main body case 2 fixed on a body (unillustrated) of the vehicle and a gearshift lever 3 and a select lever 4 that are supported by the main body case 2 in a shiftable manner (a swingable manner). The gearshift lever 3 includes an operation portion (knob) formed on an upper end portion (unillustrated) and a shaft support portion (spherical portion) 11 formed on a lower end portion. In the gearshift lever 3, a pushing rod 12, a position pin 13, an auxiliary rod 14, and a rod spring 15 are housed in this order from an upper end side of the gearshift lever 3, and a rod spring stopper 16 is attached on a lower end of the gearshift lever 3. On the other hand, the select lever 4 includes a holding portion 10 that holds the shaft support portion 11 of the gearshift lever 3 (see Fig. 5).

The gearshift lever 3 is supported to be shiftable (swingable) relative to the main body case 2 in the select direction (vehicle right-left direction) X and is supported to be shiftable relative to the main body case 2 in the shift direction (vehicle front-rear direction) Y. On the other hand, the select lever 4 is supported to be shiftable relative to the main body case 2 only in the shift direction (vehicle front-rear direction) Y.

In the select direction X, an A (automatic) mode and an M (manual) mode are set, for example. For operation positions in the shift direction Y during the A mode (shift operation positions), a P (parking) position, an R (reverse) position, and an N (neutral) position, and a D (drive) position are set, for example. For operation positions in the shift direction Y during the M mode (select operation positions), a shift-up position and a shift-down position are set, for example.

An indicator 5 that shows the operation positions of the gearshift lever 3 is arranged on the top of the main body case 2, and a gate hole 6 corresponding to the operation positions of the gearshift lever 3 is formed in the indicator 5.

A bearing portion 20 is formed in a lower portion of the main body case 2, and a support shaft 22 of the select lever 4 is rotatably supported by the bearing portion 20 with bearing collars 21. A block body (base bracket) 24 is assembled on the lower portion of the main body case 2 with locating pins 23.

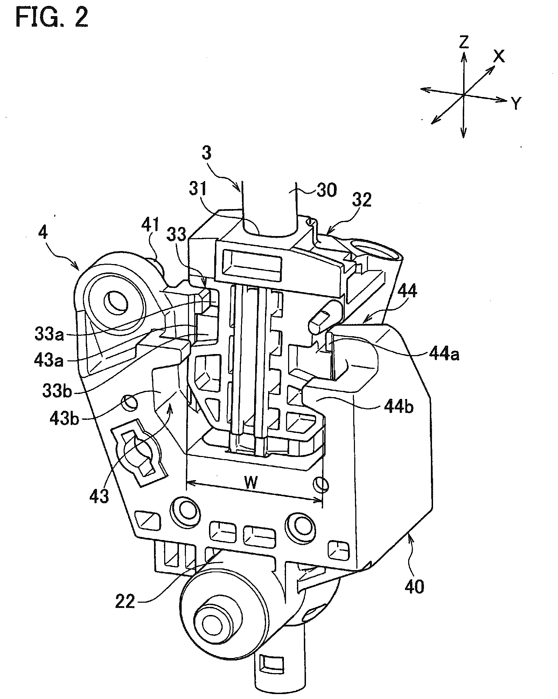

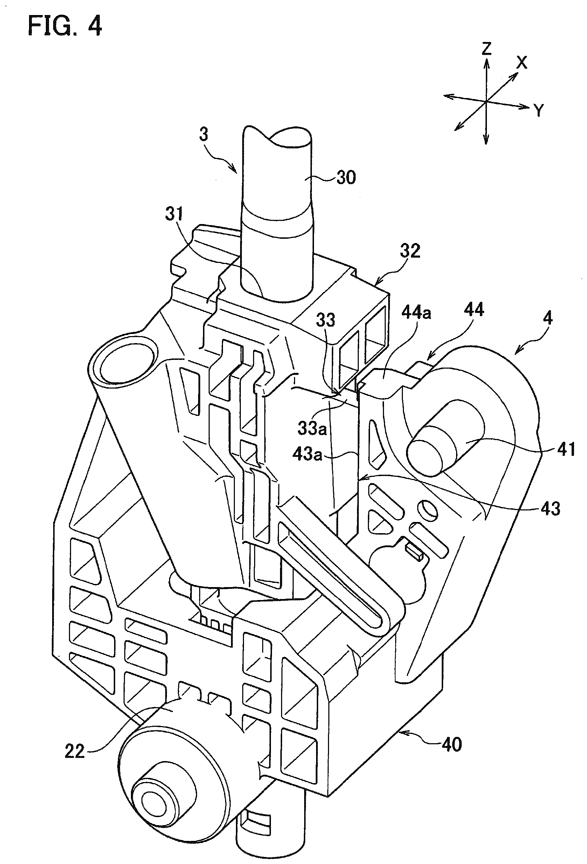

As illustrated in Figs. 2 to 6, the gearshift lever 3 includes a tubular lever pipe (lever main body) 30 and a lever holder 32 having an insertion hole 31 through which the lever pipe 30 is inserted. The lever pipe 30 is made of metal, and the lever holder 32 is made of synthetic resin. The lever holder 32 may be formed by molding (to form a lever resin mold), and the lever pipe 30 may be pressed and fitted into the molded lever holder 32.

The select lever 4 includes a select lever main body 40 made of synthetic resin. A metallic cable pin 41 to which an unillustrated cable is to be connected and the later-described metallic select lever plate 42 are inserted in the synthetic resin select lever main body 40 by insert-molding. The cable pin 41 and the select lever plate 42 may be fixed on (or inserted in) the select lever main body 40 by a method other than the insert molding. Although it is not illustrated, the cable pin 41 and the select lever plate 42 may be molded integrally.

The select lever main body 40 further includes a pair of shift direction side wall portions 43, which are disposed across the holding portion 10 with a distance from each other in the shift direction Y of the gearshift lever 3, and engage portions (engage protrusions) 44, which are disposed on the shift direction side wall portions 43 and are to be engaged with the gearshift lever 3.

The shift direction side wall portions 43 include first shift direction side wall portions 43a disposed for the shift operation positions and second shift direction side wall portions 43b disposed for the select operation positions.

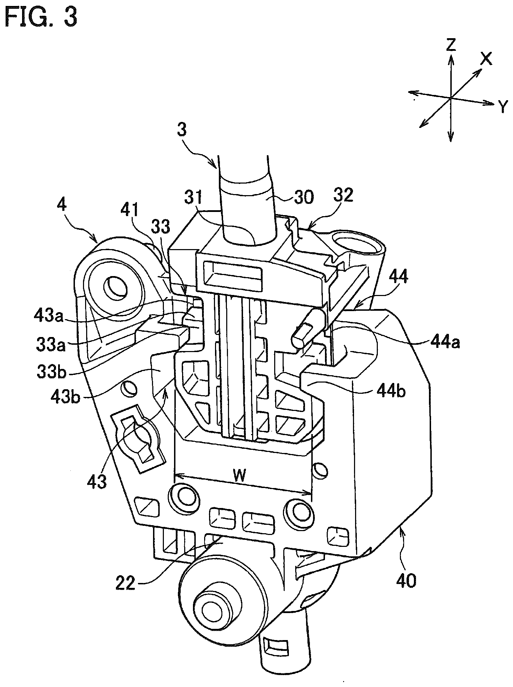

A distance D1a between the first shift direction side wall portions 43a, 43a (see Fig. 5) is almost equal to a width W of the lever holder 32 in the shift direction Y (see Fig. 2) such that the gearshift lever 3 and the select lever 4 shift together in the shift direction Y in any one of the shift operation positions. A distance D2a between the second shift direction side wall portions 43b, 43b (see Fig. 5) is longer than the width W of the lever holder 32 in the shift direction Y (see Fig. 3) such that only the gearshift lever 3 is shifted in the shift direction Y in any one of the select operation positions. Namely, the distance D1a between the first shift direction side wall portions 43a, 43a in the shift direction Y is shorter than the distance D2a between the second shift direction side wall portions 43b, 43b in the shift direction Y (see Fig. 5).

The engage portions 44 include first engage portions 44a engaged with the gearshift lever 3 in the shift operation position and second engage portions 44b engaged with the gearshift lever 3 in the select operation position which is displaced from the shift operation position in the select direction X of the gearshift lever 3. Namely, the first engage portions (first engage protrusions) 44a are formed on the first shift direction side wall portions 43a, and the second engage portions (second engage protrusions) 44b are formed on the second shift direction side wall portions 43b.

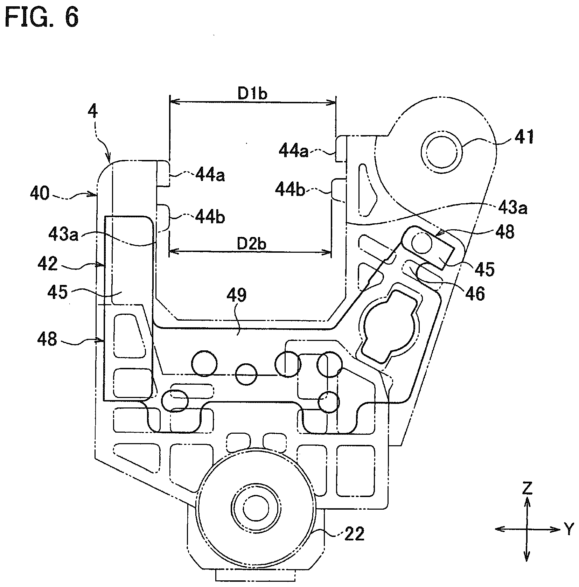

In this embodiment, a distance D1b between the first engage portions 44a, 44a in the shift direction Y is almost equal to a distance D2b between the second engage portions 44b, 44b (see Fig. 6). In this embodiment, positions of the first engage portions 44a and the second engage portions 44b in the axial direction Z with respect to the gearshift lever 3 are different, and specifically, the first engage portions 44a are positioned higher than the second engage portions 44b (see Figs. 2 and 3).

On the other hand, the gearshift lever 3 includes engage recesses 33, which are formed in parts of the lever holder 32 of the gearshift lever 3 facing the shift direction side wall portions 43 in the shift direction Y of the gearshift lever 3 to be engaged with the engage portions 44.

The engage recesses 33 include first engage recesses 33a engaged with the first engage portions 44a of the select lever 4 in the shift operation position and second engage recesses 33b engaged with the second engage portions 44b of the select lever 4 in the select operation position.

In this embodiment, positions of the first engage recesses 33a and the second engage recesses 33b in the axial direction Z with respect to the gearshift lever 3 are different, and specifically, the first engage recesses 33a are positioned higher than the second engage recesses 33b (see Figs. 2 and 3).

Such a gearshift lever 3 is inserted to the holding portion 10 of the select lever 4 from obliquely above so as to avoid interference with the engage portions 44 (first engage portions 44a and second engage portions 44b).

As illustrated in Figs. 5 and 6, the select lever 4 includes the select lever main body 40 in which the first engage portions 44a and the second engage portions 44b are formed and the select lever plate 42 for reinforcement inserted in the select lever main body 40.

The select lever plate 42 includes first plate portions (turn-back portions) 45 that reinforce the first engage portions 44a and second plate portions 46 that reinforce the second engage portions 44b. The select lever plate 42 is formed to have U-shapes, further including connecting portions 47 that are arranged to extend along the select direction X of the gearshift lever 3 and connect the first plate portions 45 and the second plate portions 46.

A pair of U-shape portions 48 formed in the U-shapes are disposed across the holding portion 10 with a distance from each other in the shift direction Y of the gearshift lever 3. The pair of U-shape portions 48, 48 (second plate portions 46, 46) are joined with each other by a coupling portion 49 arranged to extend along the shift direction Y of the gearshift lever 3.

As illustrated in Fig. 2, in the A mode (in a state where the gearshift lever 3 is shifted to the shift operation position), the first engage portions 44a of the select lever 4 and the first engage recesses 33a of the gearshift lever 3 are engaged with each other. Consequently, the first engage portions 44a of the select lever 4 serve as stoppers (retainers), and prevent the gearshift lever 3 from moving upward and getting out of the holding portion 10 of the select lever 4. When the gearshift lever 3 is shifted in the shift direction Y with the gearshift lever 3 shifted to the shift operation position, the gearshift lever 3 and the select lever 4 are shifted in the shift direction Y together.

As illustrated in Fig. 3, in the M mode (in a state where the gearshift lever 3 is shifted to the select operation position), the second engage portions 44b of the select lever 4 and the second engage recesses 33b of the gearshift lever 3 are engaged with each other. Consequently, the second engage portions 44b of the select lever 4 serve as the stoppers (retainers), and prevent the gearshift lever 3 from moving upward and getting out of the holding portion 10 of the select lever 4. When the gearshift lever 3 is shifted in the shift direction Y with the gearshift lever 3 shifted to the select operation position, only the gearshift lever 3 is shifted in the shift direction Y.

Operations and effects of this embodiment are described below.
(1) The gearshift lever device 1 includes the gearshift lever 3 including the operation portion (knob) formed on the upper end portion and the shaft support portion 11 formed on the lower end portion, and the select lever 4 including the holding portion 10 that holds the shaft support portion 11 of the gearshift lever 3. The select lever 4 further includes the pair of shift direction side wall portions 43, which are disposed across the holding portion 10 with a distance from each other in the shift direction Y of the gearshift lever 3, and the engage portions 44, which are disposed on the shift direction side wall portions 43 and are to be engaged with the gearshift lever 3.
   In the select lever 4, the pair of shift direction side wall portions 43, 43 are disposed across the holding portion 10 with the distance from each other in the shift direction Y, and additionally, the engage portions 44 are to be engaged with the gearshift lever 3 are disposed on the shift direction side wall portions 43. Since the thickness (width in select direction X) of the select lever 4 does not need to be increased in such a configuration of the select lever 4, it is possible to achieve downsizing of the entire gearshift lever device 1.
(2) The gearshift lever 3 includes the engage recesses 33, which are formed in the parts of the gearshift lever 3 facing the shift direction side wall portions 43 in the shift direction Y of the gearshift lever 3 to be engaged with the engage portions 44.
   Since the thickness (width in select direction X) of the gearshift lever 3 does not need to be increased as well in such a configuration of the gearshift lever 3, it is possible to achieve downsizing of the entire gearshift lever device 1.
(3) The engage portions 44 include the first engage portions 44a engaged with the gearshift lever 3 in the shift operation position and the second engage portions 44b engaged with the gearshift lever 3 in the select operation position which is displaced from the shift operation position in the select direction X of the gearshift lever 3.
   With such a configuration of the engage portions 44, it is possible to prevent the gearshift lever 3 from moving in the axial direction Z (vehicle top-down direction) and prevent the shaft support portion 11 of the gearshift lever 3 from getting out of the holding portion 10 of the select lever 4.
(4) The select lever 4 includes the select lever main body 40 in which the first engage portions 44a and the second engage portions 44b are formed and the select lever plate 42 for reinforcement inserted in the select lever main body 40. The select lever plate 42 includes the first plate portions 45 that reinforce the first engage portions 44a and the second plate portions 46 that reinforce the second engage portions 44b. The select lever plate 42 is formed to have U-shapes, further including the connecting portions 47 that are arranged to extend along the select direction X of the gearshift lever 3 and connect the first plate portions 45 and the second plate portions 46.

With such a configuration of the select lever 4, it is possible to achieve improvement of the strength of the select lever 4 (select lever main body 40).

Although the gearshift lever device of the present invention is described taking the above-described embodiment as an example, it is not limited to the above-described embodiment, and various other embodiments can be employed without departing from the scope of the present invention, which is defined in the claims.

## Claims

1. A gearshift lever device (1), comprising:
a gearshift lever (3) including an operation portion formed on an upper end portion and a shaft support portion (11) formed on a lower end portion; and
a select lever (4) including a holding portion (10) that holds the shaft support portion (11) of the gearshift lever (3), wherein
the gearshift lever (3) is supported to be shiftable relative to a main body case (2) in a select direction (X), representing a vehicle right - left direction, and is supported to be shiftable relative to the main body case (2) in the shift direction (Y), representing a vehicle front - rear direction, f
wherein the gearshift lever device comprises shift operation positions and select operation positions displaced from each other in the select direction of the gearshift lever (3),
the select lever (4) further includes a pair of shift direction side wall portions (43) which are disposed across the holding portion (10) with a distance from each other in the shift direction (Y) of the gearshift lever (3), and engage portions (44) which are disposed on the shift direction side wall portions (43) and are to be engaged with the gearshift lever (3),
the shift direction side wall portions (43) include first shift direction side wall portions (43a) disposed for the shift operation positions and second shift direction side wall portions (43b) disposed for the select operation positions,
the engage portions (44) include first engage portions (44a) engaged with the gearshift lever (3) in the shift operation positions and second engage portions (44b) engaged with the gearshift lever (3) in the select operation positions
**characterized in that**
the select lever (4) includes a select lever main body (40) in which first engage portions (44a) and second engage portions (44b) are formed, and a select lever plate (42) for reinforcement inserted in the select lever main body (40), and
the select lever plate (42) is formed to have U-shapes, including first plate portions (45) that reinforce the first engage portions (44a), second plate portions (46) that reinforce the second engage portions (44b), and connecting portions (47) that are arranged to extend along a select direction (X) of the gearshift lever (3) and connect the first plate portions (45) and the second plate portions (46).

2. The gearshift lever device (1) according to claim 1, wherein
the gearshift lever (3) includes engage recesses (33) which are formed in parts of the gearshift lever (3) facing the shift direction side wall portions (43) in the shift direction of the gearshift lever (3) and the engage recesses (33) include first engage recesses (33a) configured to engage with the first engage portions (44a) in the shift operation positions and second engage recesses (33b) configured to engage with the second engage portions (44b) in the select operation positions.

## Patentansprüche

1. Schalthebelvorrichtung (1), die umfasst:
einen Schalthebel (3), der einen Betätigungsabschnitt, der an einem oberen Endabschnitt ausgebildet ist, sowie einen Schaft-Trageabschnitt (11) enthält, der an einem unteren Endabschnitt ausgebildet ist; und
einen Wählhebel (4), der einen Halteabschnitt (10), der den Schaft-Trageabschnitt (11) des Schalthebels (3) hält, wobei
der Schalthebel (3) so gelagert ist, dass er relativ zu einem Hauptkörper-Gehäuse (2) in einer Wählrichtung (X), die eine Fahrzeug-Querrichtung darstellt, geschaltet werden kann, und so gelagert ist, dass er relativ zu dem Hauptkörper-Gehäuse (2) in der Schaltrichtung (Y) geschaltet werden kann, die eine Fahrzeug-Längsrichtung darstellt,
wobei die Schalthebelvorrichtung Schaltbetätigungs-Positionen und Wählbetätigungs-Positionen umfasst, die in der Wählrichtung des Schalthebels (3) zueinander versetzt sind,
der Wählhebel (4) des Weiteren ein Paar Schaltrichtungs-Seitenwandabschnitte (43) aufweist, die quer zu dem Halteabschnitt (10) mit einem Abstand zueinander in der Schaltrichtung (Y) des Schalthebels (3) angeordnet sind, sowie Eingriffsabschnitte (44) enthält, die an den Schaltrichtungs-Seitenwandabschnitten (43) angeordnet sind und mit dem Schalthebel (3) in Eingriff gebracht werden,
die Schaltrichtungs-Seitenwandabschnitte (43) erste Schaltrichtungs-Seitenwandabschnitte (43a), die für die Schaltbetätigungs-Positionen eingerichtet sind, und zweite Schaltrichtungs-Seitenwandabschnitte (43b) einschließen, die für die Schaltbetätigungs-Positionen eingerichtet sind,
die Eingriffsabschnitte (44) erste Eingriffsabschnitte (44a), die mit dem Schalthebel (3) in den Schaltbetätigungs-Positionen in Eingriff sind, und zweite Eingriffsabschnitte (44b) einschließen, die mit dem Schalthebel (3) in den Schaltbetätigungs-Positionen in Eingriff sind,
**dadurch gekennzeichnet, dass**
der Wählhebel (4) einen Wählhebel-Hauptkörper (40), in dem erste Eingriffsabschnitte (44a) und zweite Eingriffsabschnitte (44b) ausgebildet sind, sowie eine in den Wählhebel-Hauptkörper (40) eingesetzte Wählhebel-Platte (42) zur Verstärkung enthält, und
die Wählhebel-Platte (42) in U-Formen ausgebildet ist, und erste Plattenabschnitte (45), die die ersten Eingriffsabschnitte (44a) verstärken, zweite Plattenabschnitte (46), die die zweiten Eingriffsabschnitte (44b) verstärken, sowie Verbindungsabschnitte (47) enthält, die so angeordnet sind, dass sie sich in einer Wählrichtung (X) des Schalthebels (3) erstrecken und die ersten Plattenabschnitte (45) und die zweiten Plattenabschnitte (46) verbinden.

2. Schalthebelvorrichtung (1) nach Anspruch 1, wobei
der Schalthebel (3) Eingriffsaussparungen (33) enthält, die in Teilen des Schalthebels (3) ausgebildet sind, die den Schaltrichtungs-Seitenwandabschnitten (43) in der Schaltrichtung des Schalthebels (3) zugewandt sind, und die Eingriffsaussparungen (33) erste Eingriffsaussparungen (33a), die so ausgeführt sind, dass sie mit den ersten Eingriffsabschnitten (44a) in den Schaltbetätigungs-Positionen in Eingriff kommen, sowie zweite Eingriffsaussparungen (33b) einschließen, die so ausgeführt sind, dass sie mit den zweiten Eingriffsabschnitten (44b) in den Wählbetätigungs-Positionen in Eingriff kommen.

## Revendications

1. Dispositif de levier de changement de vitesse (1), comprenant :
un levier de changement de vitesse (3) comportant une portion d'actionnement formée sur une portion d'extrémité supérieure et une portion de support d'axe (11) formée sur une portion d'extrémité inférieure ; et
un levier de sélection de vitesse (4) comprenant une portion de maintien (10) qui maintient la portion de support d'axe (11) du levier de changement de vitesse (3), dans lequel
le levier de changement de vitesse (3) est supporté pour être déplaçable par rapport à un boîtier de corps principal (2) dans une direction de sélection (X), qui correspond à la direction gauche-droite du véhicule, et est supporté pour être déplaçable par rapport au boîtier de corps principal (2) dans la direction de changement de vitesse (Y), qui correspond à la direction avant-arrière du véhicule,
dans lequel le dispositif de levier de changement de vitesse comprend des positions de changement de vitesse et des positions de sélection de vitesse décalées entre elles en direction de sélection du levier de changement de vitesse (3),
le levier de sélection de vitesse (4) comprend en outre une paire de portions de paroi latérale en direction de changement de vitesse (43) qui sont disposées sur la portion de maintien (10), espacées entre elles en direction de changement de vitesse (Y) du levier de changement de vitesse (3), et des portions d'engagement (44) qui sont disposées sur les portions de paroi latérale en direction de changement de vitesse (43) et sont destinées à s'engager avec le levier de changement de vitesse (3),
les portions de paroi latérale en direction de changement de vitesse (43) comprennent des premières portions de paroi latérale en direction de changement de vitesse (43a) agencées pour les positions de changement de vitesse et des deuxièmes portions de paroi latérale en direction de changement de vitesse (43b) agencées pour les positions de sélection de vitesse,
les portions d'engagement (44) comprennent des premières portions d'engagement (44a) engagées avec le levier de changement de vitesse (3) dans les positions de changement de vitesse et des deuxièmes portions d'engagement (44b) engagées avec le levier de changement de vitesse (3) dans les positions de sélection de vitesse,
**caractérisé en ce que**
le levier de sélection de vitesse (4) comprend un corps principal de levier de sélection (40) dans lequel sont formées les premières portions d'engagement (44a) et les deuxièmes portions d'engagement (44b), et une plaque de levier de sélection de vitesse (42) de renfort insérée dans le corps principal du levier de sélection (40), et
la plaque de levier de sélection de vitesse (42) est conformée pour présenter des formes en U, comprenant des premières portions de plaque (45) qui renforcent les premières portions d'engagement (44a), des deuxièmes portions de plaque (46) qui renforcent les deuxièmes portions d'engagement (44b), et des portions de connexion (47) qui sont agencées pour s'étendre en direction de sélection (X) du levier de changement de vitesse (3) et qui connectent les premières portions de plaque (45) et les deuxièmes portions de plaque (46).

2. Dispositif de levier de changement de vitesse (1) selon la revendication 1, dans lequel
le levier de changement de vitesse (3) comprend des renfoncements d'engagement (33) qui sont formés dans des parties du levier de changement de vitesse (3) qui font face aux portions de paroi latérale en direction de changement de vitesse (43) dans la direction de changement de vitesse du levier de changement de vitesse (3), et les renfoncements d'engagement (33) comprennent des premiers renfoncements d'engagement (33a) configurés pour s'engager avec les premières portions d'engagement (44a) dans les positions de changement de vitesse et des deuxièmes renfoncements d'engagement (33b) configurés pour s'engager avec les deuxièmes portions d'engagement (44b) dans les positions de sélection de vitesse.
